# EUROPEAN PATENT APPLICATION

(11) **EP 2 937 961 A1**
(43) Date of publication of application: **28.10.2015**
(21) Application number: 13865577.4
(22) Date of filing: 20.12.2013
(51) Int. Cl.: H02J 3/00, H02J 13/00

(54) **ENERGY MANAGEMENT DEVICE AND ENERGY MANAGEMENT SYSTEM**

(30) Priority: 21.12.2012 JP 2012280231
(71) Applicant: Panasonic Intellectual Property Management Co., Ltd., Osaka-shi, Osaka 540-6207 (JP)
(72) Inventor: YAMAGUCHI, Hideaki, Osaka-shi, Osaka 540-6207 (JP); HASHIMOTO, Masaru, Osaka-shi, Osaka 540-6207 (JP); SATO, Minoru, Osaka-shi, Osaka 540-6207 (JP)
(74) Representative: Appelt, Christian W.
(86) International application number: PCT/JP2013/007508
(87) International publication number: WO 2014/097646

(57) **Abstract**

An energy management apparatus 10 includes a power acquisition unit 12, a specification unit 13, an allowable value setting unit 14, and a management processing unit 15. The power acquisition unit 12 acquires an amount of power consumed by a plurality of devices 30. The specification unit 13 specifies respective operating conditions of the devices 30. An upper limit of an amount of power per unit time, which is determined for each time slot, is set in the allowable value setting unit 14 as an allowable amount of power in each time slot. The management processing unit 15 determines the operating conditions of the devices 30, which are specified by the specification unit 13, such that a total amount of power consumed by the devices 30 in each time slot is maintained within a range of the allowable amount of power set in the allowable value setting unit 14.

## Description

### TECHNICAL FIELD

The present invention relates to an energy management apparatus that manages an amount of power consumed by a consumer facility, and an energy management system that uses the energy management apparatus.

### BACKGROUND ART

Techniques for managing an amount of power consumed by a consumer facility have been proposed in the related art with various aims such as limiting a monthly amount of consumed power, suppressing power consumption at peak times, and reducing an electricity charge.

JP 2010-259186 A (referred to as "Document 1" hereafter), for example, describes a control system that performs prearranged operations on the basis of information relating to electricity charges in respective time slots. The control system starts to operate a first electric device at a predetermined start time, and when the first electric device operates at or above an allowable value, the control system switches the first electric device to a low power consumption operation and starts to operate a second electric device. In other words, according to this control system, when a plurality of electric devices are operated, respective operation timings of the electric devices are varied relative to each other so that time slots in which power consumption is high do not overlap. As a result, the power consumption can be prevented from exceeding a contracted amount of power or an allowable amount of power, and a circuit breaker can be prevented from tripping.

The allowable value of the configuration described in Document 1 is defined as an approximately 80% charge amount in the case of charging, a period of approximately three hours in the case of a clothes dryer, and so on. With this technique, the electric devices are operated during time slots in which a unit price of the electricity charge is at a minimum, and therefore the electricity charge can be reduced. Moreover, by adjusting an operating schedule of the electric devices, peak power consumption can be suppressed.

However, the types of electric devices that can be used during the time slot in which the unit price of the electricity charge is low are limited, and therefore, with the techniques described in Document 1, when electric devices that must be used during time slots in which the unit price of the electricity charge is high are included, the electricity charge cannot be reduced.

### SUMMARY OF INVENTION

An object of the present invention is to provide an energy management apparatus with which an increase in a total electricity charge can be suppressed while allowing devices to be operated during time slots in which a unit price of an electricity charge is high, and to provide an energy management system that uses the energy management apparatus.

An energy management apparatus according to the present invention includes: a specification unit configured to specify respective operating conditions of a plurality of devices; a power acquisition unit configured to acquire an amount of power consumed by the plurality of devices; an allowable value setting unit in which an upper limit of an amount of power per unit time, which is determined for each of a plurality of time slots, is set as an allowable amount of power of each of the time slots; and a management processing unit configured to determine the operating conditions of the plurality of devices, which are specified by the specification unit, such that a total amount of power consumed by the plurality of devices in each of the time slots is maintained within a range of the allowable amount of power set in the allowable value setting unit.

The energy management apparatus preferably further includes: a charge setting unit in which a target value of an upper limit of an electricity charge over a predetermined period is set as an allowable charge; a price list storage unit configured to store a unit electricity price for each of the time slots; and a calculation unit configured to calculate the allowable amount of power of each of the time slots from the allowable charge set in the charge setting unit and the unit electricity price stored for each of the time slots in the price list storage unit, and the allowable value setting unit is preferably configured to store the allowable amount of power calculated by the calculation unit.

In the energy management apparatus, the plurality of devices preferably include a plurality of environment improvement devices that contribute to an improvement in an indoor air quality, and when at least one of the plurality of environment improvement devices is to be operated, the management processing unit is preferably configured to select an environment improvement device that can be operated at a usable amount of power, the usable amount of power being within the range of the allowable amount of power and excluding an amount of power consumed by another device, and then specify an operating condition of the selected environment improvement device.

The energy management apparatus preferably further includes: an air quality acquisition unit configured to acquire measurement data from an apparatus that is configured to measure the indoor air quality; and a target value setting unit in which target values of a plurality of levels relating to the measurement data acquired by the air quality acquisition unit are set as allowable contamination levels, the management processing unit is preferably configured to select an allowable contamination level for each of a plurality of levels determined in relation to the usable amount of power, and select the allowable contamination level such that the indoor air quality steadily improves as the usable amount of power increases, and the management processing unit is preferably configured to select the environment improvement device that can be operated at the usable amount of power so that the measurement data approach the selected allowable contamination level, and then specify the operating condition of the selected environment improvement device.

In the energy management apparatus, the management processing unit preferably is not configured to operate the plurality of environment improvement devices during a period in which the obtained measurement data indicate that the indoor air quality is more favorable than a most favorable allowable contamination level, and the management processing unit is preferably configured to select an environment improvement device having a superior indoor air quality improvement effect, regardless of the usable amount of power, during a period in which the obtained measurement data indicate that the indoor air quality is less favorable than a least favorable allowable contamination level, and then specify the operating condition of the selected environment improvement device.

In the energy management apparatus, when at least one of the plurality of environment improvement devices has been activated in response to a user operation, the management processing unit is preferably configured to operate another device using a remaining amount of power obtained by excluding a power consumption of the at least one environment improvement device from the usable amount of power.

In the energy management apparatus, the air quality acquisition unit is preferably configured to acquire the indoor air quality measured by the apparatus in each of a plurality of rooms, and the management processing unit, in which a degree of priority is set in relation to the indoor air quality in each of the plurality of rooms, is preferably configured to allocate the usable amount of power to each of the plurality of environment improvement devices in order from an environment improvement devices disposed in a room in which the degree of priority is high.

The energy management apparatus preferably further includes a communication interface unit configured to obtain the unit electricity price of each of the time slots by communicating with another apparatus, and the price list storage unit is preferably configured to store the unit electricity price of each of the time slots, which is obtained by the communication interface unit.

An energy management system according to the present invention includes the energy management apparatus described above, and a measurement apparatus configured to measure the amount of power consumed by the plurality of devices.

According to the configuration of the present invention, the allowable amount of power, i.e. the upper limit of the amount of power per unit time, is determined for each time slot, whereupon the operating conditions of the devices are determined such that the total amount of power consumed by the devices in each time slot is maintained within the range of the allowable amount of power. As a result, an increase in the total electricity charge can be suppressed while allowing the devices to be operated during time slots in which the unit price of the electricity charge is high.

### BRIEF DESCRIPTION OF DRAWINGS

A preferred embodiment of the present invention will be described in detail below. Other features and advantages of the present invention will become more apparent with reference to the following detailed description and the attached drawings.
Fig. 1 is a block diagram showing an embodiment;
Fig. 2 is a view showing an example of a price list storage unit used in this embodiment;
Fig. 3 is a view showing an example of an allowable value setting unit used in this embodiment;
Fig. 4 is a block diagram showing another example configuration of this embodiment; and
Fig. 5 is a view showing an example of an operation according to this embodiment.

### DESCRIPTION OF EMBODIMENTS

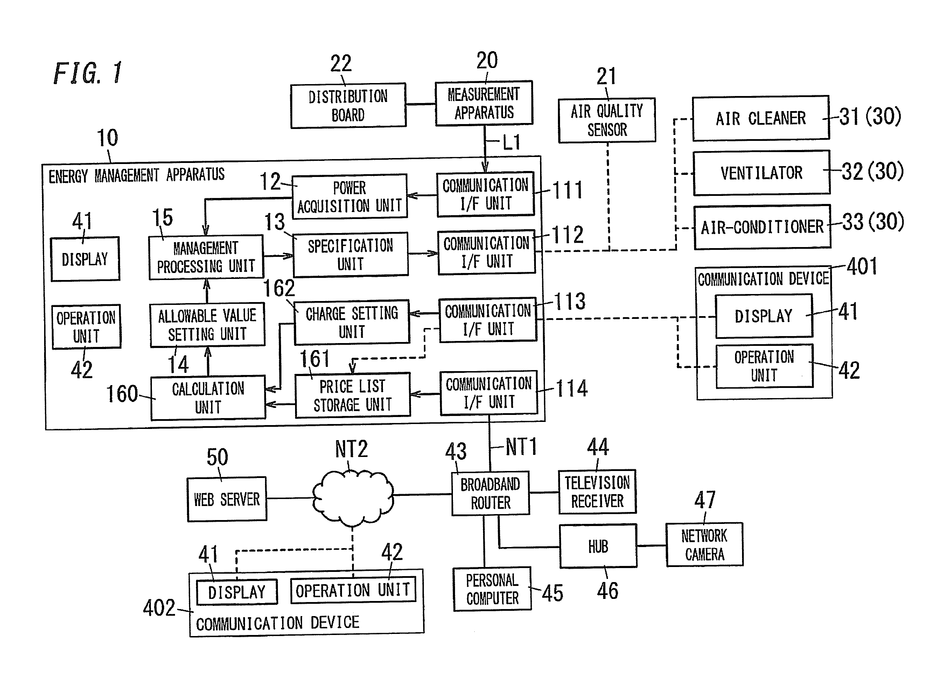

An energy management system configured as shown in Fig. 1 is envisaged as an embodiment described below. The energy management system includes an energy management apparatus 10 having a function for specifying an operating condition of each of a plurality of devices 30, and a measurement apparatus 20 that measures an amount of power consumed by the plurality of devices 30. The energy management system is used in a consumer facility in which power is purchased from an electricity supplier. The electricity supplier is typically an electric power company, but may be a power producer or the like.

This type of electricity supplier may market power at different unit electricity prices according to the time of day. For example, many electricity suppliers prepare a fee structure according to which different unit electricity prices are applied during the day, when demand for power is relatively high, and at night, when demand for power is relatively low. In this type of fee structure, the unit electricity price may be divided into approximately three or four levels within a single day.

A case in which the unit electricity price is divided into three levels according to the time of day will be described below. Note, however, that numerical values cited below are examples for facilitating understanding, and the present invention is not limited to these values. Examples of types of the plurality of devices 30 are also cited, but the present invention is not limited to the cited types of the plurality of devices 30.

The plurality of devices 30 may be any devices 30 used in the consumer facility, but preferably include a device 30 that improves an indoor air quality (IAQ). The indoor air quality is an air quality for maintaining the health and comfort of people, and is affected by various environmental factors. More specifically, these environmental factors can be divided into chemical factors, biological factors, and physical factors.

The chemical factors include carbon dioxide, volatile organic compounds (VOCs), and odorous components. The biological factors include house dust and pollen. The physical factors include temperature and humidity. House dust denotes mold, viruses, tick excrement, pet dander, and so on. In addition to the environmental factors described above, the indoor air quality is affected by dirt and dust. Moreover, the physical factors may also include light, noise, electromagnetic waves, and so on.

In the example described below, temperature, humidity, carbon dioxide, house dust, pollen, odors, VOCs, dirt, and dust are envisaged as the environmental factors affecting the indoor air quality. In consideration of current circumstances, an air quality sensor 21 is provided as a measurement apparatus that can measure these environmental factors alone. The air quality sensor 21 is not limited to a configuration for measuring the environmental factors described above, and the air quality sensor 21 is used to measure environmental factors in accordance with aims.

An air cleaner 31, a ventilator 32, and an air-conditioner 33 that regulates the temperature and humidity are envisaged as the devices 30 that improve the indoor air quality. Hereafter, these devices 30 will be referred to collectively as "environment improvement devices". The air cleaner 31, the ventilator 32, and the air-conditioner 33 serve as representative examples of the environment improvement devices, but devices 30 such as an apparatus that disperses charged microparticles of water through the air, a humidifier, and a dehumidifier may also be used as the environment improvement devices.

Each of the devices 30 used in the consumer facility, including the environment improvement devices, has a function for communicating with the energy management apparatus 10. By communicating with the respective devices 30, the energy management apparatus 10 specifies the operating conditions of the devices 30 and obtains operating conditions from the devices 30. In other words, the energy management apparatus 10 functions as a so-called HEMS (home energy management system) controller, which is an apparatus that controls and monitors the respective devices 30. Note that when the devices 30 have a function for measuring an amount of power, the energy management apparatus 10 may also obtain the amount of power consumed by the devices 30 from the devices 30.

A wireless communication path that uses radio waves as a transmission medium is envisaged as a communication path between the energy management apparatus 10 and the respective devices 30. Note, however, that a distribution network that supplies power to the respective devices 30 within the consumer facility may double as the communication path, or a dedicated communication line may be used. When the distribution network doubles as the communication path, communication between the energy management apparatus 10 and the respective devices 30 is performed using a power line communication technique.

The measurement apparatus 20 has a function for measuring an amount of power consumed by a trunk circuit of a distribution board 22, and amounts of power consumed respectively by branch circuits that bifurcate from the distribution board 22. The amount of power consumed by the trunk circuit may be determined as a sum of the amounts of power consumed respectively by the branch circuits. In the example shown in the drawing, the measurement apparatus 20 is housed separately to the distribution board 22. The measurement apparatus 20 is disposed adjacent to the distribution board 22. By housing the measurement apparatus 20 separately to the distribution board 22, the measurement apparatus 20 can be attached at a later stage to an existing consumer facility already provided with the distribution board 22. Note, however, that the measurement apparatus 20 may be configured so as to be stored in the distribution board 22. Further, the measurement apparatus 20 may be configured to be capable of measuring an amount of power consumed in each power outlet in addition to the amounts of power consumed by the respective branch circuits.

The energy management apparatus 10 has a function for obtaining the amounts of power measured by the measurement apparatus 20 through communication. In the example shown in the drawing, a wired communication path is employed as a communication path between the energy management apparatus 10 and the measurement apparatus 20, but a wireless communication path may be employed instead. Here, a case in which the energy management apparatus 10 and the measurement apparatus 20 perform serial communication using a wired communication path L1 conforming to the RS-485 (EIA-485) standard is envisaged.

The energy management apparatus 10 includes a communication interface unit (referred to hereafter as a "communication I/F unit") 111 that communicates with the measurement apparatus 20, and a communication I/F unit 112 that communicates with the plurality of devices 30. The energy management apparatus 10 also includes a communication I/F unit 113 that transmits information between at least a display 41 and an operation unit 42.

Further, the energy management apparatus 10 shown in the drawing includes a communication I/F unit 114 for connecting the energy management apparatus 10 to a communication network NT1. The communication I/F unit 114 preferably conforms to Ethernet (registered trademark) specifications. In the example shown in the drawing, a broadband router 43 is connected to the communication I/F unit 114. Further, various apparatuses used in the consumer facility and a telecommunication network NT2 such as the Internet are connected to the broadband router 43. A television receiver 44, a personal computer 45, and a hub 46 are illustrated as examples of the apparatuses used in the consumer facility. Furthermore, a network camera 47 is connected to the hub 46.

In the example configuration described above, the energy management apparatus 10 is capable of communicating with various web servers 50 that provide various services via the telecommunication network NT2. The services provided by the various web servers 50 include provision of information such as a weather forecast or a predicted air temperature, functional updates for the energy management apparatus 10, a service for activating a smartphone or a tablet terminal, to be described below, and so on. Furthermore, a power reduction request or the like may be received from a web server 50 managed by the electricity supplier or a service provider that provides services on behalf of the electricity supplier. Only one web server 50 is shown in the drawing, but in actuality, a plurality of web servers 50 are provided in accordance with the services and requests provided and issued to the energy management apparatus 10.

The energy management apparatus 10 shown in the drawing is capable of providing a user with information via the television receiver 44 and the personal computer 45, and obtaining images captured by the network camera 47. The personal computer 45 is also used to perform maintenance on the energy management apparatus 10. Note that the configuration shown in the drawing is an example, and constituent elements of the system are not limited to the example shown in the drawing.

The display 41 and the operation unit 42 may be a display/operation apparatus in which a flat panel display and a touch switch are provided integrally. Further, the display 41 and the operation unit 42 may be provided integrally in the energy management apparatus 10, or housed separately to the energy management apparatus 10. When the communication I/F unit 113 is compatible with specifications selected from Wi-Fi (registered trademark), Bluetooth (registered trademark), and so on, the display/operation apparatus may be a portable communication device 401 such as a smartphone or a tablet terminal. Moreover, when the telecommunication network NT2 includes a mobile telephone network, a portable communication device 402 such as a smartphone or a tablet terminal may be used as the display/operation apparatus by employing a mobile telephone network provided in the communication device 402 as a communication path.

Configurations and operations of the energy management apparatus 10 will be described in further detail below. Note that only main parts of the energy management apparatus 10 shown in Fig. 1 will be described, these parts being required to illustrate the technical spirit of this embodiment. The energy management apparatus 10 includes, as main hardware elements, a device having a processor that realizes the configurations described below by executing a program and a device constituting the communication I/F units 111 to 114. The device having the processor is selected from a microcomputer having an inbuilt memory, a CPU requiring a separate memory, and so on. The program is normally stored in the memory prior to factory shipping, but may be configured so as to be obtained via the telecommunication network NT2, stored on a readable recording medium and read to the memory, or the like.

The energy management apparatus 10 includes a power acquisition unit 12 that obtains the amount of power consumed by the plurality of devices 30 from the measurement apparatus 20 via the communication I/F unit 111, and a specification unit 13 that specifies the respective operating conditions of the plurality of devices 30 via the communication I/F unit 112. The power acquisition unit 12 obtains power information indicating the amount of power consumed by the plurality of devices 30. When the power acquisition unit 12 is capable of obtaining the amount of power consumed by the plurality of devices 30 from the plurality of devices 30 via the communication I/F unit 112, the power acquisition unit 12 may use the amount of power consumption obtained from the plurality of devices 30 together with the amount of power consumption obtained from the measurement apparatus 20.

The power of the plurality of devices 30, which is obtained by the power acquisition unit 12 from the measurement apparatus 20, is in actuality an amount of power obtained over a prescribed sampling period rather than a momentary amount of power. The sampling period in which the power acquisition unit 12 obtains the power is selected appropriately from thirty seconds, one minute, five minutes, and so on. When the sampling period in which to obtain the power is short, an amount of information increases, leading to an increased processing load, and when the sampling period in which to obtain the power is long, a precision with which the power is managed decreases. The sampling period is therefore preferably selected from one of the periods described above.

A configuration in which the power acquisition unit 12 obtains the amount of power consumed by each branch circuit from the measurement apparatus 20 will be described below. Further, the power acquisition unit 12 has a function for determining a power consumption corresponding to an operation for each of the plurality of devices 30 using a relationship between the operating conditions of the devices 30, which are specified by the specification unit 13 via the communication I/F unit 112, and variation in the amounts of power of the respective branch circuits, obtained from the measurement apparatus 20. In other words, the power acquisition unit 12 learns the power consumption corresponding to an operation for each device 30.

Note, however, that when a set temperature is specified as the operating condition of the air-conditioner 33, large variation occurs in the power consumption, even at an identical set temperature, due to external factors such as an indoor/outdoor air temperature difference, a heat insulation capacity of a room, and the existence of an indoor heat source. Moreover, the power consumption of the air-conditioner 33 over a period extending from a point at which the air-conditioner 33 is activated to a point at which the air temperature in the room reaches the vicinity of the set temperature is much greater than the power consumption after the set temperature is reached. Hence, the air-conditioner 33 preferably uses an average value of the power consumption over the period extending from the point at which the air-conditioner 33 is activated to the point at which the air temperature in the room reaches the vicinity of the set temperature and the power consumption in the period after the air temperature of the room reaches the set temperature.

The energy management apparatus 10 includes an allowable value setting unit 14 in which an allowable amount of power is set for each time slot, and a management processing unit 15 that determines the operating conditions of the devices 30, which are specified by the specification unit 13, such that a total amount of power consumed by the plurality of devices 30 in each time slot is maintained within a range of the allowable amount of power. The allowable amount of power set by the allowable value setting unit 14 is an upper limit of an allowed amount of power per unit time, and the management processing unit 15 determines the operation of at least one of the devices 30 such that the total amount of power consumed per unit time by the plurality of devices 30 used in the consumer facility does not exceed the allowable amount of power. Note that the allowable value setting unit 14 divides a predetermined period into a plurality of time slots, and sets the allowable amount of power for each time slot. The predetermined period may be a single day or a single year. The predetermined period is not limited to the above periods.

The allowable amount of power is set in accordance with the time slot. The time slot does not only denote a time slot within a single day, and the concept of the time slot may also include days of the week and seasons. In other words, the management processing unit 15 determines the operating conditions of the devices 30 specified by the specification unit 13, among the plurality of devices 30, such that the total amount of power per unit time consumed by the plurality of devices 30 in each time slot is maintained within the range of the allowable amount of power set in the allowable value setting unit 14.

The allowable amount of power in each time slot may be set in the allowable value setting unit 14 as desired. Note, however, that in this embodiment, the allowable amount of power is set on the basis of a target value of an upper limit of an electricity charge set in the consumer facility and a unit electricity price of each time slot.

The unit electricity price is obtained by communicating with another apparatus via the communication I/F unit 114. The other apparatus with which communication is performed via the communication I/F unit 114 is selected appropriately from a web server managed by the electricity supplier, a web server managed by a service provider that provides services on behalf of the electricity supplier, and so on, for example. In other words, the other apparatus is an external apparatus other than the energy management apparatus 10. The unit electricity price of each time slot, obtained by the communication I/F unit 114 through communication with the other apparatus, is stored in a price list storage unit 161. Content stored in the price list storage unit 161 can be updated, and by updating the content of the price list storage unit 161 when the electricity charge is modified, an operation of the system can be maintained in accordance with the electricity charge modification. Note that the unit electricity prices stored in the price list storage unit 161 may be input using the operation unit 42.

The target value of the upper limit of the electricity charge is set for a predetermined period. For example, an upper limit of a charge for the electricity used by the consumer facility is determined in relation to a predetermined period such as one month, three months, or one year. The management processing unit 15 controls the operations of the respective devices 30 so as not to exceed the upper limit. The period for which the target value of the upper limit of the electricity charge is set may be set as desired, for example at one week. To facilitate comparison with the electricity charge charged by the electricity supplier, however, a period of one month is preferably set.

Hereafter, the target value of the upper limit of the electricity charge within the predetermined period will be referred to as an "allowable charge". The energy management apparatus 10 includes a charge setting unit 162 that sets the allowable charge. A user within the consumer facility sets the allowable charge in the charge setting unit 162 using the operation unit 42. Note, however, that the energy management apparatus 10 may obtain an allowable charge set as a recommended value by communicating with the web server managed by the electricity supplier or the web server managed by the service provider, and set the obtained allowable charge in the charge setting unit 162.

The allowable amount of power in each time slot, which is set in the allowable value setting unit 14, is calculated by a calculation unit 160 using the unit electricity price of each time slot, stored in the price list storage unit 161, and the allowable charge set in the charge setting unit 162.

A case in which a unit electricity price is provided for each of a plurality of time slots within a single day and the allowable charge is set as a target value of a monthly upper limit will be described here. In this case, the calculation unit 160 divides the allowable charge by thirty days, i.e. the number of days in a month, and by twenty-four hours, i.e. the number of hours in a day. In other words, the calculation unit 160 determines a charge per hour from the allowable charge set for the predetermined period. The calculation unit 160 then calculates a usable amount of power per unit time (i.e. one hour) for each time slot from the unit electricity price of each time slot using the charge per hour determined from the allowable charge as an upper limit. The amount of power calculated in this manner is stored in the allowable value setting unit 14 as the allowable amount of power.

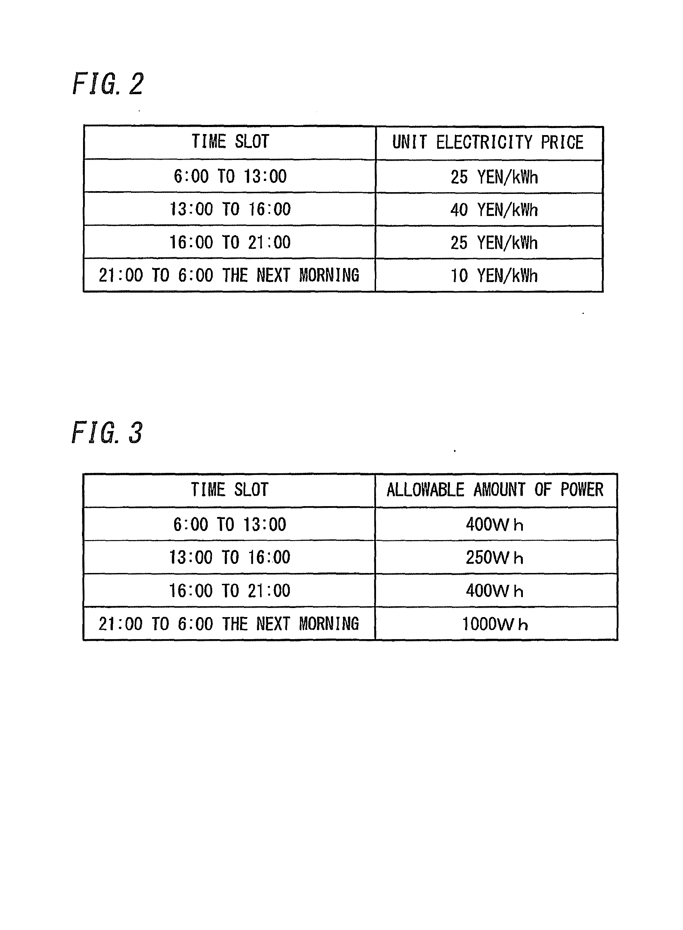

In other words, the calculation unit 160 determines the charge per unit time from the allowable charge set for the predetermined period, and uses the unit electricity price to calculate an amount of power corresponding to this charge as the allowable amount of power. A case in which the predetermined period is one month, the allowable charge is 7200 yen, the unit time is one hour, and the unit electricity prices of the respective time slots, stored in the price list storage unit 161, have a relationship shown in Fig. 2 will be described as a specific example.

First, the calculation unit 160 determines the charge per unit time from the allowable charge. In other words, the calculation unit 160 divides 7200 yen by thirty days and by twenty-four hours. As a result, the electricity charge per unit time (one hour in this example) is 10 yen. Meanwhile, the unit electricity prices correspond to the relationship shown in Fig. 2, and therefore the amount of power (the allowable amount of power) that may be consumed per unit time is determined for each time slot such that a relationship shown in Fig. 3 is obtained.

The allowable amount of power determined in this manner is stored in the allowable value setting unit 14 and used by the management processing unit 15 to determine the operations of the devices 30. The management processing unit 15 integrates the amount of power consumed over each unit time by the devices 30 that are in use, and when one of the devices 30 is to be activated, first, the management processing unit 15 determines a value by subtracting the amount of power integrated over the period of the unit time from the allowable amount of power. This value is an amount of power that can be consumed within the range of the allowable amount of power over the period of the unit time, and therefore the management processing unit 15 also subtracts an amount of power predicted to be consumed over the period of the unit time by the plurality of devices 30 that are in use. The management processing unit 15 then allocates a remaining amount of power to the device 30 to be newly activated. In other words, (allowable amount of power) - (past amount of power) - (amount of power predicted to be consumed by other devices) = (usable amount of power).

To perform the above calculations, the management processing unit 15 must determine the amount of power predicted to be consumed by the devices 30, and as a result, the processing load may increase. To simplify the processing, when one of the devices (a first device) 30 is to be activated, the management processing unit 15 may determine the power consumption of a device (a second device) 30 that is already operative, and determine the amount of power to be allocated to the newly activated first device 30 on the basis of this power consumption. In other words, the management processing unit 15 sets an average value of the allowable amount of power as an allowable power, and allocates the usable amount of power, which is obtained by subtracting the power consumption obtained by the power acquisition unit 12 from the allowable power, to the device 30 to be newly activated.

For example, when the new device (the first device) 30 is to be activated at 13:00, the allowable power, i.e. the average value of the allowable amount of power, is 250 W, and when the new device (the first device) 30 is to be activated at 21:00, the allowable power is 1000 W. Hence, when the power consumption of another device (the second device) 30 is 200 W at 13:00, the usable amount of power is 50 W, and when the power consumption of another device (the second device) 30 is 200 W at 21:00, the usable amount of power is 800 W.

Incidentally, the plurality of devices 30 include the plurality of environment improvement devices, as described above. In a specific example, two devices, namely the air cleaner 31 and the ventilator 32, may be selected as the environment improvement devices, and two operating conditions, namely a low power operation and a high power operation, may be selected as the operating condition of the air cleaner 31. The power consumption of the air cleaner 31 is set at 100 W during the low power operation and 300 W during the high power operation, and the power consumption of the ventilator 32 is set at 50 W. Here, both the air cleaner 31 and the ventilator 32 improve the indoor air quality, and it may be assumed that an improvement effect increases steadily as the power consumption of the operation increases. In other words, according to this example configuration, the indoor air quality improvement effect is at a maximum when the air cleaner 31 performs the high power operation, is second best when the air cleaner 31 performs the low power operation, and is at a minimum when the ventilator 32 is operated.

Under the above conditions, the environment improvement devices may be activated respectively at 13 : 00 and 21: 00. At 13:00, the usable amount of power is 50 W, and therefore only the ventilator 32 can be activated, but at 21:00, the usable amount of power is 1000 W, and therefore the environment improvement devices can be operated as desired. Here, a restriction according to which the indoor air quality improvement effect must be maximized while activating only one of the environment improvement devices is applied, and therefore the air cleaner 31 is caused to perform the high power operation. The power consumption of the consumer facility at this time is 500 W, which is obtained by adding 300 W, i.e. the power consumption of the air cleaner 31, to 200 W, i.e. the power consumption of the other device 30. When the restriction is not applied, the air cleaner 31 and the ventilator 32 may be used together, and in this case, the power consumption of the consumer facility reaches 550 W.

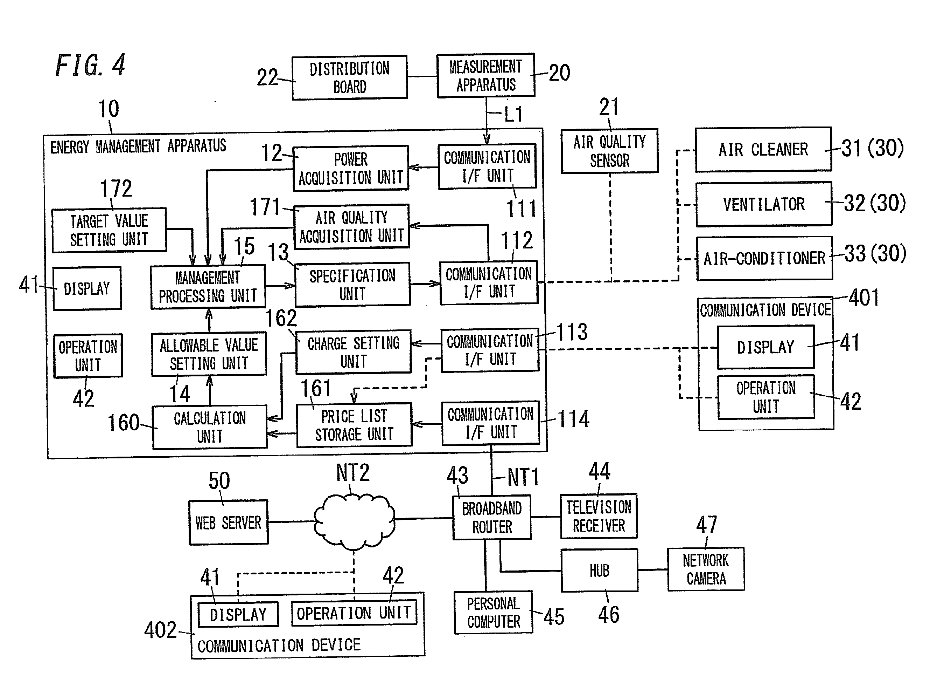

In a case where the environment improvement devices can be selected according to the magnitude of the usable amount of power, as described above, the management processing unit 15 has a function for determining the operating conditions of the environment improvement devices in consideration of both improving the indoor air quality and suppressing the power consumption. In this case, the energy management apparatus 10 includes an air quality acquisition unit 171, as shown in Fig. 4, for obtaining predetermined measurement data from the air quality sensor 21 serving as the measurement apparatus that measures the indoor air quality. The air quality sensor 21 is capable of communicating with the energy management apparatus 10, similarly to the devices 30, and is envisaged as using a communication path constituted by a wireless communication path that uses radio waves as a transmission medium. Note, however, that a wired communication path doubling as the communication path of the distribution network or a wired communication path using a dedicated communication line may be employed as the communication path between the energy management apparatus 10 and the air quality sensor 21 instead. When the distribution network doubles as the communication path, communication between the energy management apparatus 10 and the air quality sensor 21 is performed using a power line communication technique.

As described above, the air quality sensor 21 is capable of measuring a plurality of environmental factors relating to the indoor air quality. The energy management apparatus 10 focuses on at least one of the environmental factors measured by the air quality sensor 21 so that the air quality acquisition unit 171 obtains measurement data relating to this environmental factor from the air quality sensor 21 via the communication I/F unit 112.

Further, the energy management apparatus 10 includes a target value setting unit 172 in which an allowable contamination is set as a target value of the measurement data obtained by the air quality acquisition unit 171 from the air quality sensor 21 in relation to the environmental factor. The allowable contamination is set in the target value setting unit 172 at a plurality of levels. To simplify the description, an example of a case in which two levels, namely an upper limit value and a lower limit value, are set as the allowable contamination will be described.

The management processing unit 15 selects the allowable contamination serving as the target value from the target value setting unit 172 in accordance with the usable amount of power, selects the environment improvement devices in order to reach the selected allowable contamination, and determines the operating conditions of the selected environment improvement devices. In other words, the management processing unit 15 selects an allowable contamination level for each level determined in relation to the usable amount of power, and selects the allowable contamination level such that the indoor air quality improves steadily as the usable amount of power increases. Further, the management processing unit 15 selects a first environment improvement device that can be operated at the usable amount of power from the plurality of environment improvement devices 31 to 33 so that the measurement data approach the selected allowable contamination, and specifies the operating condition of the selected first environment improvement device.

For example, the management processing unit 15 allows the high power operation of the air cleaner 31, at which the indoor air quality improvement effect is maximized, to be selected only in a time slot where the usable amount of power exceeds 500 W, and allows only the ventilator 32 to be selected in other time slots. Further, when an environment improvement device having a superior indoor air quality improvement effect is selected, the management processing unit 15 selects the lower allowable contamination (the lower limit value, or in other words an allowable contamination at which the indoor air quality improves) from the target value setting unit 172. When an environment improvement device having an inferior indoor air quality improvement effect is selected, on the other hand, the management processing unit 15 selects the higher allowable contamination (the upper limit value, or in other words an allowable contamination at which the indoor air quality deteriorates) from the target value setting unit 172.

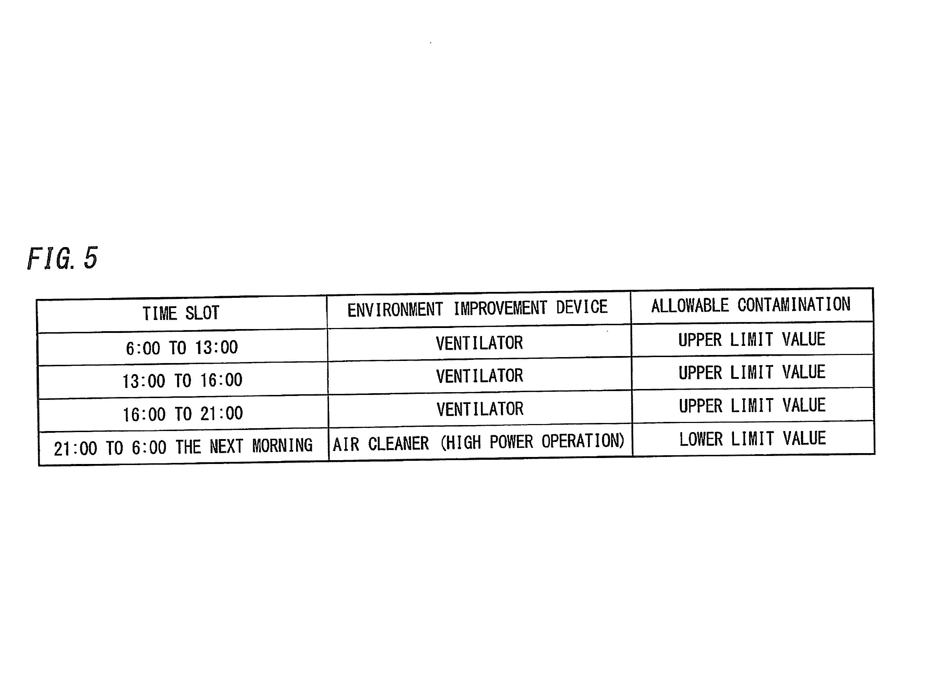

When the above conditions are satisfied, only the ventilator 32 can be selected between 6:00 and 21:00, while the high power operation of the air cleaner 31 can be selected from 21:00 to 6:00 the next morning. In other words, the time slot, the type and operating condition of the environment improvement device, and the degree of contamination have a relationship shown in Fig. 5. Note that when the power consumption of the other device 30 is large, for example in the case of a hot water dispenser, either the ventilator 32 or the low power operation of the air cleaner 31 is selected as the environment improvement device even during the time slot extending from 21:00 to 6:00 the next morning.

In the above example operation, a case in which the allowable contamination is set at two levels was described, but similar techniques can be applied in a case where the allowable contamination is set in the target value setting unit 172 at three or more levels. In this case, the management processing unit 15 selects the allowable contamination level from the target value setting unit 172 for each level determined in relation to the usable amount of power. In other words, the management processing unit 15 selects the allowable contamination level such that the indoor air quality improves steadily as the usable amount of power increases. Furthermore, the management processing unit 15 selects an environment improvement device that can be operated within the range of the usable amount of power, and specifies the operating condition of the selected environment improvement device such that when the environment improvement device is used, the measurement data obtained from the air quality sensor 21 approach the selected allowable contamination.

In the example operation described above, when an environment improvement device having a superior indoor air quality improvement effect is operated, the measurement data may fall below the minimum allowable contamination, and when an environment improvement device having an inferior indoor air quality improvement effect is operated, the measurement data may continuously exceed the maximum allowable contamination. In the former condition, power is consumed wastefully from the viewpoint of energy conservation, and in the latter condition, the indoor air quality improvement effect generated by the environment improvement devices is insufficient.

Hence, the management processing unit 15 preferably has a function for suppressing power consumption by stopping the environment improvement device during a period in which the obtained measurement data indicate that the indoor air quality is even more favorable than a most favorable allowable contamination level. Further, the management processing unit 15 preferably has a function for improving the indoor air quality improvement effect by selecting an environment improvement device having a superior indoor air quality improvement effect, regardless of the usable amount of power, during a period in which the obtained measurement data indicate that the indoor air quality is even less favorable than a least favorable allowable contamination level. An example of an operation performed in a case where these functions are added to the management processing unit 15 will be described below.

When, in accordance with the conditions shown in Fig. 3, the power consumption of the devices 30 excluding the environment improvement devices is 200 W at 13:00, under normal circumstances the management processing unit 15 decides to operate the ventilator 32, the power consumption of which is 50 W.

Here, when the measurement data from the air quality sensor 21 exceed the maximum value of the maximum allowable contamination, the management processing unit 15 determines the operating conditions of the devices 30 such that the air cleaner 31 is caused to perform the low power operation. At this time, from the viewpoint of energy conservation, the ventilator 32 is preferably stopped, but in a case where the indoor air quality improvement effect is prioritized, a decision may be taken to continue to operate the ventilator 32. Furthermore, a decision is taken here to cause the air cleaner 31 to perform the low power operation, but a decision may be taken to cause the air cleaner 31 to perform the high power operation.

When the measurement data obtained from the air quality sensor 21 subsequently falls to or below the maximum value of the allowable contamination due to the operation of the air cleaner 31, the management processing unit 15 decides to stop the air cleaner 31 and resume the operation of the ventilator 32. In other words, the energy management apparatus 10 returns to the normal operation for suppressing the electricity charge.

When the power consumption of the devices 30 excluding the environment improvement devices is 200 W at 21:00, on the other hand, under normal circumstances the management processing unit 15 causes the air cleaner 31 to perform the high power operation.

Here, when the indoor air quality improves to the extent that the measurement data obtained from the air quality sensor 21 falls below the minimum value of the allowable contamination, this means that the indoor air quality has improved more than necessary, and that power is being consumed wastefully. Hence, when the measurement data obtained from the air quality sensor 21 falls below the minimum value of the allowable contamination, the management processing unit 15 decides to stop the environment improvement devices.

Note that when the measurement data obtained from the air quality sensor 21 remain in the vicinity of the allowable contamination without falling below the allowable contamination, the indoor air quality may be said to be favorable. When the allowable contamination is set in the target value setting unit 172 at three or more levels, as in the example operation described above, the management processing unit 15 can select the level at which to cause the air cleaner 31 to perform the low power operation and the level at which to operate the ventilator 32 sequentially in accordance with the allowable contamination level. By selecting environment improvement devices having a steadily more inferior indoor air quality improvement effect sequentially as the measurement data obtained from the air quality sensor 21 approach the lower limit of the allowable contamination, a favorable indoor air quality improvement effect can be obtained while contributing to energy conservation.

In the above example operation, a case in which the energy management apparatus 10 specifies the operating conditions of all of the devices 30 was described, but at least a part of the devices 30 may be activated in response to an operation performed by a user within the consumer facility. In particular, a device 30 that is activated by a user operation may be activated to increase the comfort of the user, and therefore the user may prefer the energy management apparatus 10 not to modify the operation of the device 30.

In consideration of these circumstances, a flag is preferably raised in the management processing unit 15 in relation to an environment improvement device, among the devices 30, that has been activated by a user operation irrespective of the specifications from the energy management apparatus 10, whereby the environment improvement device is removed from the control subjects of the energy management apparatus 10. In other words, an environment improvement device that has been activated by a user operation is treated as an operative device 30 when the usable amount of power is determined by the energy management apparatus 10. The environment improvement device in relation to which the flag has been raised is operated preferentially over the other devices 30. Note that since the environment improvement device has been activated by a user operation, the other environment improvement devices do not normally have to be operated, but when leeway exists in the usable amount of power, the other environment improvement devices may also be operated.

An example of a case in which an environment improvement device is activated by a user operation will now be described. According to the conditions shown in Fig. 3, the allowable amount of power in a time slot extending from 13:00 to 16:00 is 250 Wh. Here, a case in which the ventilator 32 is operative at a power consumption of 50 W and the total power consumption of the devices 30, measured by the measurement apparatus 20, is 200 W will be described.

When the user performs an operation to cause the air cleaner 31 to perform the low power operation, the power consumption increases by 100 W, and therefore the total power consumption reaches 300 W, thereby exceeding the allowable amount of power. Since the air cleaner 31 has been activated by the user, the flag is raised, and accordingly, the management processing unit 15 causes the air cleaner 31 to perform the low power operation preferentially over the other devices 30. Since the flag has not been raised in relation to the ventilator 32 and the total power consumption of the devices 30 exceeds the allowable amount of power, the management processing unit 15 stops the ventilator 32. In this example, the total power consumption falls to 250 W when the ventilator 32 is stopped, and therefore the allowable amount of power in the subject time slot is satisfied.

Note that when the air cleaner 31 is activated by a user operation, the user is notified of the condition of the measurement data relating to the indoor air quality, i.e. whether the measurement data are within the range of the upper limit value and the lower limit value set as the allowable contamination or have fallen below the lower limit value of the allowable contamination, via a notification lamp and the display 41. A light source of the notification lamp is selected from a light-emitting diode, an organic light-emitting diode (an OLED; an organic EL element), and so on, for example.

When a building in which the energy management system described above is used includes a plurality of rooms, the air quality sensor 21 is preferably disposed in each room. Note, however, that it is not necessary to provide the air quality sensor 21 in every room. In this case, the air quality sensor 21 measures the indoor air quality in room units, whereupon the air quality acquisition unit 171 obtains measurement data relating to the indoor air quality in room units. A correspondence relationship between the air quality sensor 21 and the rooms is stored in advance in a storage unit, not shown in the drawings.

Further, the indoor air quality of a child's room used mainly by a child must be maintained at a more favorable level than the indoor air quality of another room. Moreover, the indoor air quality of a living room that is used daily must be maintained at a more favorable level than the indoor air quality of a guest room that is not used daily. Furthermore, indoor air quality improvement is performed preferentially on different rooms in different time slots and on different days of the week, and the degree of priority with which the indoor air quality of a certain room is improved varies according to the time slot and the day of the week. Hence, the degree of priority with which to activate the environment improvement devices is preferably set for each room in accordance with the time slot and the day of the week. The degree of priority is stored in the aforementioned storage unit together with the correspondence relationship between the air quality sensor 21 and the rooms, and the correspondence relationship can be updated appropriately using the display 41 and the operation unit 42.

A case of a building having three rooms, namely a first room, a second room, and a third room, will be described as an example. The air quality sensor 21 is disposed in the first room and the second room, and activated on the basis of a condition according to which the first room has a higher degree of priority than the second room. Note that the environment improvement devices disposed in the third room are not subject to control.

Example priority settings and an example operation performed under these priority settings will be described below. According to the conditions shown in Fig. 3, the allowable amount of power in a time slot extending from 16:00 to 21:00 is 400 Wh. Here, a case in which the total power consumption of the plurality of devices 30 is 200 W will be described. Under these conditions, a case in which the measurement data relating to the indoor air quality are within the range of the upper limit value and the lower limit value of the allowable contamination in every room and a case in which the measurement data relating to the indoor air quality exceed the upper limit value of the allowable contamination in every room will be described as two examples.

First, when the measurement data are within the range of the upper limit value and the lower limit value of the allowable contamination in every room, the lower limit value of the allowable contamination is used as the target value in relation to the first room having a high degree of priority, while the upper limit value of the allowable contamination is used as the target value in relation to the second room having a low degree of priority. Further, the environment improvement devices disposed in the third room, which are not subject to control, are stopped.

The first room has the highest degree of priority among the three rooms with respect to improvement of the indoor air quality. Therefore, first, the management processing unit 15 causes the air cleaner 31 in the first room to perform the high power operation. The total power consumption at this point is 500 W, thereby exceeding the allowable power amount condition. However, improvement of the indoor air quality is prioritized. When the indoor air quality improves thereafter such that the measurement data falls to a prescribed value, the management processing unit 15 causes the air cleaner 31 to perform the low power operation. The total power consumption at this stage is 300 W, thereby satisfying the allowable power amount condition. Once the measurement data relating to the indoor air quality reach the lower limit value, the ventilator 32 is activated instead of the air cleaner 31, and as a result, the total power consumption decreases to 250 W.

The degree of priority with which the indoor air quality of the second room is improved is lower than that of the first room, and the upper limit value of the allowable contamination serves as the target value. Since the current measurement data relating to the indoor air quality are lower than the upper limit value, the management processing unit 15 achieves energy conservation by stopping the environment improvement devices. Note that the environment improvement devices in the third room are not subject to control, and are therefore maintained in a stopped condition.

When the measurement data exceed the upper limit value of the allowable contamination in every room, on the other hand, first, the upper limit value of the allowable contamination is set as the target value of the first room having a high degree of priority. At this time, the management processing unit 15 causes the air cleaner 31 in the first room to perform the high power operation. As a result, the total power consumption reaches 500 W, thereby exceeding the allowable amount of power, but since improvement of the indoor air quality is prioritized, the operation is continued. Further, while the air cleaner 31 in the first room performs the high power operation, no usable power is generated, and therefore the environment improvement devices in the second room are stopped. The environment improvement devices in the third room are not subject to control and are therefore maintained in the stopped condition.

When the measurement data relating to the indoor air quality of the first room falls below the upper limit value of the allowable contamination thereafter, the air cleaner 31 in the first room is caused to perform the low power operation. The total power consumption at this time is 300 W, and therefore 100 W of usable power are generated. Accordingly, the environment improvement devices in the second room can be operated. As regards the environment improvement devices in the second room, the management processing unit 15 may, depending on the usable amount of power, either cause the air cleaner 31 to perform the low power operation or activate the ventilator 32.

When the air quality sensor 21 and the environment improvement devices are disposed in each room, as in the above example operation, the degree of priority with which to improve the indoor air quality is determined for each room, whereupon the energy management apparatus 10 controls the operating conditions of the environment improvement devices in each room. In other words, the energy management apparatus 10 assists in suppressing an increase in the electricity charge while improving the indoor air quality.

Note that the plurality of devices 30 according to the example configuration described above include the plurality of environment improvement devices, but even when the environment improvement devices are not included, a configuration in which at least one of the devices 30 is used within the range of the allowable amount of power determined for each time slot may be employed. Furthermore, with the configuration described above, the amount of power consumed by the consumer facility can be suppressed while keeping the electricity charge over the predetermined period within the target value of the upper limit.

The energy management apparatus 10 according to this embodiment includes the specification unit 13, the power acquisition unit 12, the allowable value setting unit 14, and the management processing unit 15. The specification unit 13 is configured to specify the respective operating conditions of the plurality of devices 30. The power acquisition unit 12 is configured to acquire the amount of power consumed by the plurality of devices 30. The upper limit of the amount of power per unit time, which is determined for each of time slots, is set in the allowable value setting unit 14 as the allowable amount of power of each of the time slots. The management processing unit 15 is configured to determine the operating conditions of the plurality of devices 30, which are specified by the specification unit 13, such that the total amount of power consumed by the plurality of devices 30 in each of the time slots is maintained within the range of the allowable amount of power set in the allowable value setting unit 14.

Preferably, as in this embodiment, the energy management apparatus 10 further includes the charge setting unit 162, the price list storage unit 161, and the calculation unit 160, and the allowable value setting unit 14 is configured to perform a following operation. The target value of the upper limit of the electricity charge over the predetermined period is set in the charge setting unit 162 as the allowable charge. The price list storage unit 161 is configured to store the unit electricity price for each of the time slots. The calculation unit 160 is configured to calculate the allowable amount of power of each of the time slots from the allowable charge set in the charge setting unit 162 and the unit electricity price stored for each of the time slots in the price list storage unit 161. The allowable value setting unit 14 is configured to store the allowable amount of power calculated by the calculation unit 160.

Preferably, as with the energy management apparatus 10 according to this embodiment, the management processing unit 15 is configured to perform a following operation. The plurality of devices 30 include the plurality of environment improvement devices 31 to 33 that contribute to an improvement in the indoor air quality. When at least one of the plurality of environment improvement devices 31 to 33 is to be operated, the management processing unit 15 is configured to select the environment improvement device that can be operated at the usable amount of power, the usable amount of power being within the range of the allowable amount of power and excluding the amount of power consumed by the other devices 30, and then specify the operating condition of the selected environment improvement device.

Preferably, as in this embodiment, the energy management apparatus 10 further includes the air quality acquisition unit 171 and the target value setting unit 172, and the management processing unit 15 is configured to perform a following operation. The air quality acquisition unit 171 is configured to acquire measurement data from an apparatus (the air quality sensor 21) that is configured to measure the indoor air quality. Target values of a plurality of levels relating to the measurement data acquired by the air quality acquisition unit 171 are set in the target value setting unit 172 as allowable contamination levels. The management processing unit 15 is configured to select the allowable contamination level for each of the plurality of levels determined in relation to the usable amount of power, and select the allowable contamination level such that the indoor air quality steadily improves as the usable amount of power increases. Furthermore, the management processing unit 15 is configured to select the environment improvement device that can be operated at the usable amount of power so that the measurement data approach the selected allowable contamination level, and then specify the operating condition of the selected environment improvement device.

Preferably, as with the energy management apparatus 10 according to this embodiment, the management processing unit 15 is not configured to operate the plurality of environment improvement devices 31 to 33 during the period in which the obtained measurement data indicate that the indoor air quality is more favorable than the most favorable allowable contamination level. Further, the management processing unit 15 is configured to select an environment improvement device having a superior indoor air quality improvement effect, regardless of the usable amount of power, during the period in which the obtained measurement data indicate that the indoor air quality is less favorable than the least favorable allowable contamination level, and then specify the operating condition of the selected environment improvement device.

Preferably, as with the energy management apparatus 10 according to this embodiment, when at least one of the plurality of environment improvement devices 31 to 33 has been activated in response to a user operation, the management processing unit 15 is configured to operate the other devices using the remaining amount of power obtained by excluding the power consumption of the at least one environment improvement device from the usable amount of power.

Preferably, as with the energy management apparatus 10 according to this embodiment, the air quality acquisition unit 171 is configured to acquire the indoor air quality measured by the above-mentioned apparatus in each of a plurality of rooms. The degree of priority is set in the management processing unit 15 in relation to the indoor air quality in each of the plurality of rooms, and the management processing unit 15 is configured to allocate the usable amount of power to each of the plurality of environment improvement devices in order from the environment improvement device disposed in a room in which the degree of priority is high.

Preferably, as in this embodiment, the energy management apparatus 10 further includes the communication interface unit 114, and the price list storage unit 161 is configured to perform a following operation. The communication interface unit 114 is configured to obtain the unit electricity price of each of the time slots by communicating with the other apparatus. The price list storage unit 161 is configured to store the unit electricity price of each of the time slots, which is obtained by the communication interface unit 114.

The energy management system according to this embodiment includes the energy management apparatus 10 according to this embodiment, and the measurement apparatus 20. The measurement apparatus 20 is configured to measure the amount of power consumed by the plurality of devices 30.

Several preferred embodiments of the present invention were described above, but various amendments and modifications may be applied by persons skilled in the art without departing from the original spirit and scope of the present invention, or in other words the scope of the claims.

## Claims

1. An energy management apparatus comprising:
a specification unit configured to specify respective operating conditions of a plurality of devices;
a power acquisition unit configured to acquire an amount of power consumed by the plurality of devices;
an allowable value setting unit in which an upper limit of an amount of power per unit time, which is determined for each of a plurality of time slots, is set as an allowable amount of power of each of the time slots; and
a management processing unit configured to determine the operating conditions of the plurality of devices, which are specified by the specification unit, such that a total amount of power consumed by the plurality of devices in each of the time slots is maintained within a range of the allowable amount of power set in the allowable value setting unit.

2. The energy management apparatus according to claim 1, further comprising:
a charge setting unit in which a target value of an upper limit of an electricity charge over a predetermined period is set as an allowable charge;
a price list storage unit configured to store a unit electricity price for each of the time slots; and
a calculation unit configured to calculate the allowable amount of power of each of the time slots from the allowable charge set in the charge setting unit and the unit electricity price stored for each of the time slots in the price list storage unit,
wherein the allowable value setting unit is configured to store the allowable amount of power calculated by the calculation unit.

3. The energy management apparatus according to claim 2,
wherein the plurality of devices comprise a plurality of environment improvement devices that contribute to an improvement in an indoor air quality, and
wherein when at least one of the plurality of environment improvement devices is to be operated, the management processing unit is configured to select an environment improvement device that can be operated at a usable amount of power, the usable amount of power being within the range of the allowable amount of power and excluding an amount of power consumed by another device, and then specify an operating condition of the selected environment improvement device.

4. The energy management apparatus according to claim 3, further comprising:
an air quality acquisition unit configured to acquire measurement data from an apparatus that is configured to measure the indoor air quality; and
a target value setting unit in which target values of a plurality of levels relating to the measurement data acquired by the air quality acquisition unit are set as allowable contamination levels,
wherein the management processing unit is configured to select an allowable contamination level for each of a plurality of levels determined in relation to the usable amount of power, and select the allowable contamination level such that the indoor air quality steadily improves as the usable amount of power increases, and
wherein the management processing unit is configured to select the environment improvement device that can be operated at the usable amount of power so that the measurement data approach the selected allowable contamination level, and then specify the operating condition of the selected environment improvement device.

5. The energy management apparatus according to claim 4, wherein the management processing unit is not configured to operate the plurality of environment improvement devices during a period in which the obtained measurement data indicate that the indoor air quality is more favorable than a most favorable allowable contamination level, and
wherein the management processing unit is configured to select an environment improvement device having a superior indoor air quality improvement effect, regardless of the usable amount of power, during a period in which the obtained measurement data indicate that the indoor air quality is less favorable than a least favorable allowable contamination level, and then specify the operating condition of the selected environment improvement device.

6. The energy management apparatus according to claim 4, wherein when at least one of the plurality of environment improvement devices has been activated in response to a user operation, the management processing unit is configured to operate another device using a remaining amount of power obtained by excluding a power consumption of the at least one of the plurality of environment improvement devices from the usable amount of power.

7. The energy management apparatus according to claim 4,
wherein the air quality acquisition unit is configured to acquire the indoor air quality measured by the apparatus in each of a plurality of rooms, and
wherein the management processing unit, in which a degree of priority is set in relation to the indoor air quality in each of the plurality of rooms, is configured to allocate the usable amount of power to each of the plurality of environment improvement devices in order from an environment improvement device disposed in a room in which the degree of priority is high.

8. The energy management apparatus according to any one of claims 2 to 7, further comprising a communication interface unit configured to obtain the unit electricity price of each of the time slots by communicating with another apparatus,
wherein the price list storage unit is configured to store the unit electricity price of each of the time slots, which is obtained by the communication interface unit.

9. An energy management system comprising:
the energy management apparatus according to claim 1; and
a measurement apparatus configured to measure the amount of power consumed by the plurality of devices.
